# EUROPÄISCHE PATENTSCHRIFT

(11) **EP 2 931 821 B1**
(45) Veröffentlichungstag und Bekanntmachung des Hinweises auf die Patenterteilung: **02.01.2019**
(21) Anmeldenummer: 13788725.3
(22) Anmeldetag: 04.11.2013
(51) Int. Cl.: C09D 163/00, C09J 163/00, C08L 63/00, C08G 59/14

(54) **VERWENDUNG VON SUBSTITUIERTEN BENZYLALKOHOLEN IN REAKTIVEN EPOXY-SYSTEMEN**
USE OF SUBSTITUTED BENZYL ALCOHOLS IN REACTIVE EPOXY SYSTEMS
UTILISATION D'ALCOOLS BENZYLIQUES SUBSTITUÉS DANS DES SYSTÈMES ÉPOXYDES RÉACTIFS

(30) Priorität: 17.12.2012 DE 102012223387
(43) Veröffentlichungstag der Anmeldung: 21.10.2015
(73) Patentinhaber: Evonik Degussa GmbH, 45128 Essen (DE)
(72) Erfinder: SPYROU, Emmanouil, 46514 Schermbeck (DE); ORTELT, Martina, 48249 Dülmen (DE); FUCHSMANN, Dirk, 45721 Haltern am See (DE); KOHLSTRUK, Britta, 45966 Gladbeck (DE); GOLLAN, Elke, 44653 Herne (DE); HENSCHKE, Andrea, 48249 Dülmen (DE); HILLEN, Jens, 48734 Reken (DE)
(86) Internationale Anmeldenummer: PCT/EP2013/072885
(87) Internationale Veröffentlichungsnummer: WO 2014/095139

(56) Entgegenhaltungen:
- EP-A2- 0 822 212
- DE-A1-102009 028 019
- DATABASE WPI Week 200338 Thomson Scientific, London, GB; AN 2003-397337 XP002718840, -& JP 2002 338662 A (AISHIN KAKO KK) 27. November 2002 (2002-11-27)
- DATABASE WPI Week 201327 Thomson Scientific, London, GB; AN 2013-F11244 XP002718831, -& WO 2013/047319 A1 (NIPPON PAINT CO LTD) 4. April 2013 (2013-04-04)

## Beschreibung

Die vorliegende Erfindung betrifft den Einsatz von substituierten Benzylalkoholen als Modifizierungsmittel in Epoxidsystemen.

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Diese zum Beispiel mit Polyaminen gehärteten aromatischen Epoxidharze besitzen neben guter Chemikalien- und Lösungsmittelbeständigkeit eine gute Haftfestigkeit auf vielen Untergründen.

Heutzutage werden häufig Modifizierungsmittel in Epoxy-Systemen verwendet. Sie erhöhen die Reaktivität der eingesetzten Amine und vermindern gleichzeitig die Viskosität der Formulierung, womit die Verarbeitung vereinfacht wird. Aufgrund der Umweltschutz-Gesetzgebung sind gängige Modifizierungsmittel unter Druck geraten, da sie häufig einen niedrigen Siedepunkt besitzen und damit aus der Formulierung ausgasen oder heraus diffundieren. Ersatzstoffe mit höheren Siedepunkten wurden in der Vergangenheit getestet, wiesen aber nicht die erforderliche viskositätsvermindernde Wirkung auf, verkürzten unerwünscht die Topfzeit oder zeigten eine nicht ausreichende Reaktivitätssteigerung auf.

Es besteht also weiterhin der Bedarf an alternativen Modifizierungsmitteln, die die Nachteile des Standes der Technik nicht aufweisen.

Aufgabe der vorliegenden Erfindung ist somit die Bereitstellung neuer Modifizierungsmittel, die in Standard-Epoxyformulierungen nicht ausgasen und sowohl eine ausreichende viskositätsreduzierende Wirkung besitzen als auch zu einer maximalen Wärmeformbeständigkeit beitragen.

Überraschend wurde gefunden, dass speziell substituierte Benzylalkohole, die insbesondere einen Siedepunkt von mindestens 240°C aufweisen, den oben genannten Anforderungen in besonderer Weise entsprechen.

Ein erster Gegenstand der vorliegenden Erfindung ist somit die Verwendung von am aromatischen Ring substituierten Benzylalkoholen, wobei die ringständigen Substituenten ausgewählt sind aus Alkoxy- oder Dialkylaminogruppen oder aus linearen, verzweigten oder cyclischen Alkylgruppen mit mindestens drei C-Atomen sind, als Modifizierungsmittel für Epoxidharze.

Ein weiterer Gegenstand der vorliegenden Erfindung sind Zusammensetzungen, insbesondere reaktive Zusammensetzungen, enthaltend
A) mindestens ein Epoxid-Gruppen aufweisendes Harz
B) mindestens einen Härter, der insbesondere reaktiv gegenüber der Komponente A) ist und
C) mindestens ein Modifizierungsmittel in Form eines am aromatischen Ring substituierten Benzylalkohols, wobei die ringständigen Substituenten ausgewählt sind aus Alkoxy- oder Dialkylaminogruppen oder aus linearen, verzweigten oder cyclischen Alkylgruppen mit mindestens drei C-Atomen
D) optional Hilfs- und Zusatzstoffe.

Geeignete Epoxid-Gruppen aufweisende Harze A) werden z. B. in der Patentschrift EP 0675185 beschrieben: Es kommen eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche.
Vorzugsweise handelt es sich dabei um Glycidylether, die sich von mehrwertigen Phenolen, insbesondere Bisphenolen sowie Novolaken ableiten und deren Molmassen, bezogen auf die Anzahl der Epoxygruppen ME ("Epoxidäquivalentgewichte", "EV-Wert"), zwischen 100 und 500 g/mol, insbesondere jedoch zwischen 150 und 250 g/mol, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxybenzophenon, Bis-(4-hydroxyphenyl)-1,1-ethan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon u. a. sowie die Chlorierungs- und Bromierungsprodukte der vorstehend genannten Verbindungen wie beispielsweise Tetrabrom-Bisphenol A.

Ganz besonders bevorzugt werden als Epoxid-Gruppen aufweisende Harze A) flüssige Diglycidylether auf Basis von Bisphenol A und Bisphenol F mit einem Epoxidäquivalentgewicht von 180 bis 190 g/mol eingesetzt.

Es können darüber hinaus auch Polyglycidylether von Polyalkoholen als Epoxid-Gruppen aufweisende Harze verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diethylenglykoldiglycidylether, Dipropylenglykoldiglycidylether, höhere Polyoxyalkylenglykoldiglycidylether, wie z. B. höhere Polyoxyethylenglykoldiglycidylether und Polyoxypropylenglykoldiglycidylether, Mischpolyoxyethylen-propylenglykoldiglycidylether, Polyoxytetramethylenglykoldiglycidylether, Polyglycidylether des Glycerins, des 1,2,6-Hexantriols, Trimethylolpropans, Trimethylolethans, Pentaerythrits, Sorbitols, Polyglycidylether von oxalkylierten Polyolen (wie z. B. des Glycerins, Trimethylolpropans, Pentaerythrits u. a.), Diglycidylether des Cyclohexandimethanols, Bis-(4-hydroxycyclohexyl)methans und 2,2-Bis-(4-hydroxycyclohexyl)propans, Polyglycidylether des Rizinusöls, Triglycidyltris-(2-hydroxy-ethyl)-isocyanurat.

Weiterhin kommen als Komponente A) Poly-(N-glycidyl)-Verbindungen in Frage, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele hierfür sind Adipinsäurediglycidylester, Phthalsäurediglycidylester und Hexahydrophthalsäurediglycidylester.

Weiterhin seien Glycidylester ungesättigter Carbonsäuren und epoxidierte Ester von ungesättigten Alkoholen bzw. ungesättigten Carbonsäuren als geeignete Harze A) genannt.

Die Epoxid-Gruppen aufweisenden Harze A) werden im Allgemeinen in Mengen von 5 bis 95 Gew.-%, vorzugsweise von 50 bis 90 Gew.-%, bezogen auf die Summe der Massen der Verbindungen A), B) und C), eingesetzt.

Zusätzlich zu den vorab genannten Polyglycidylethern können in der eingesetzten Komponente A) Monoepoxide als reaktive Verdünner mit anwesend sein. Hierfür eignen sich beispielsweise Methylglycidylether, Butylglycidylether, Allylglycidylether, Ethylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12- bis C13-Alkoholen, Phenylglycidylether, Kresylglycidylether, p-t-Butylphenylglycidylethers, p-Octylphenylglycidylether, p-Phenyl-phenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid), halogenhaltige Epoxide, wie z. B. Epichlorhydrin. Die genannten Monoepoxide sind in Anteilen von bis zu 30 Gew.-%, vorzugsweise 10 bis 20 Gew.-%, bezogen auf die Masse der Polyglycidylether, enthalten.

Eine ausführliche Aufzählung der geeigneten Epoxidverbindungen findet sich darüber hinaus in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Im Rahmen der vorliegenden Erfindung können jeweils auch Mischungen von mehreren der vorab beschriebenen Epoxidharze verwendet werden.

Als Komponente B) können insbesondere alle bekannten Aminhärtungsmittel für 1,2-Epoxide eingesetzt werden. Beispielhaft seien genannt:
aliphatische Amine, wie die Polyalkylenpolyamine, Diethylentriamin und Triethylentetramin, Trimethylhexamethylendiamin, 2-Methyl-pentandiamin, Oxyalkylenpolyamine, wie Polyoxypropylendi- und -triamin und 1,13-Diamino-4,7,10-trioxatridecan,
cycloaliphatische Amine, wie Isophorondiamin (3,5,5-Trimethyl-3-aminomethyl-cyclohexylamin), 4,4'-Diaminodicyclohexylmethan, 2,2,4- und 2,4,4-Trimethylhexamethylendiamin, 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, TCD-Diamin(3(4), 8(9)-Bis(aminomethyl)-tricyclo[5.2.1,0²⁶]decan),
araliphatische Amine, wie Xylylendiamine,
aromatische Amine, wie Phenylendiamine und 4,4'-Diaminodiphenylmethan; Addukthärter, die Umsetzungsprodukte von Epoxidverbindungen, insbesondere Glycidylether des Bisphenol A und F, mit überschüssigem Amin sind, Polyamidoaminhärter, die durch Kondensation von Mono- und Polycarbonsäuren mit Polyaminen erhalten werden, insbesondere durch Kondensation von Dimerfettsäuren mit Polyalkylenpolyaminen,
und Mannichbasenhärter, die durch Umsetzung von ein- oder mehrwertigen Phenolen mit Aldehyden, insbesondere Formaldehyd, und Polyaminen erhalten werden.
Auch Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol kommen in Frage. Darüber hinaus eignen sich auch Phenalkamine, die häufig in einer Mannichreaktion aus Cardanolen, Aldehyden und Aminen gewonnen werden. Es können auch Mischungen der vorab genannten Aminhärtungsmittel eingesetzt werden.

Die Härter B) werden im Allgemeinen in Mengen von 0,01 bis 50, vorzugsweise von 1 bis 40 %, bezogen auf die Summe der Massen der Verbindungen A), B) und C) eingesetzt.

Als erfindungsgemäße Modifizierungsmittel C) kommen alle Benzylalkoholderivate in Form eines am aromatischen Ring substituierten Benzylalkohols in Frage, wobei die ringständigen Substituenten ausgewählt sind aus Alkoxy- oder Dialkylaminogruppen oder aus linearen, verzweigten oder cyclischen Alkylgruppen mit mindestens drei C-Atomen. Wesentlich für die genannten Verbindungen ist, dass diese einen Siedepunkt von mindestens 240 °C aufweisen.

Grundsätzlich gibt es keine Einschränkung hinsichtlich der Stellung und der Anzahl der Substituenten am aromatischen Ring. Vorzugsweise liegt neben der Hydroxymethylgruppe des Benzylalkohols nur ein weiterer ringständiger Substituent vor. Im Falle der Alkoxygruppen und der linearen verzweigten oder cyclischen Alkylgruppen mit mindestens drei C-Atomen sind diese vorzugsweise in 4-Stellung (para-Position) zur Hydroxymethylgruppe des Benzylalkohols. Die Dialkylaminogruppen befinden sich insbesondere in 3- oder 4-Stellung (meta- oder para Position) zur Hydroxymethylgruppe des Benzylalkohols.
Als Alkoxygruppen eignen sich alle Alkoxygruppen mit 1 bis 20 C-Atomen, insbesondere mit 1 bis 8 C-Atomen, wobei Methoxy- und Ethoxy-Gruppen insbesondere bevorzugt sind.
Die Alkylgruppe der Dialkylaminogruppen weist 1 bis 20 C-Atome, vorzugsweise 1 bis 8 C-Atome auf. Insbesondere bevorzugt handelt es sich um bei der Alkylgruppe der Dialkylaminogruppen um Methyl-, Ethyl-, Propyl oder Butyl-Gruppen.
Die linearen, verzweigten oder cyclischen Alkylgruppen weisen mindestens drei C-Atome, vorzugsweise 3 bis 8 C-Atome auf, wobei Propyl, Isopropyl oder Butyl insbesondere bevorzugt sind.

Bevorzugt werden 4-Methoxybenzylalkohol, 3-Dimethylaminobenzylalkohol und 4-Isopropylbenzylalkohol eingesetzt.

Die Modifizierungsmittel C) werden im Allgemeinen in Mengen von 0,1 bis 30 Gew.-%, vorzugsweise von 5 bis 20 Gew.-%, bezogen auf die Summe der Massen der Verbindungen A), B) und C), eingesetzt.

Die erfindungsgemäße Zusammensetzung kann neben den Komponenten A), B) und C) noch weitere übliche Hilfs- und Zusatzstoffe D) enthalten, wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Stabilisierungsmittel, Verlauf- bzw. Verdickungsmittel (Thixotropierungsmittel), Entschäumer und/oder Netzmittel, Reaktivverdünner, Füllstoffe, Weichmacher, flammhemmende Stoffe und dgl. Diese Additive können den härtbaren Mischungen gegebenenfalls längere Zeit vorher oder erst unmittelbar vor der Verarbeitung zugegeben werden.

Als Beschleuniger, insbesondere für die Härtung nach dem Zweikomponentenverfahren mit Aminhärtungsmitteln, können beispielsweise Phenole und Alkylphenole mit 1 - 12 C-Atomen in der Alkylgruppe, Kresol, die verschiedenen Xylenole, Nonylphenol, Polyphenole wie Bisphenol A und F, OHgruppenhaltige aromatische Carbonsäuren wie Salicylsäure, m-Hydroxybenzoesäure, p-Hydroxybenzoesäure sowie tert. Amine, wie Benzyldimethylamin, 1,3,5-Tris(dimethylamino)phenol, Mischungen aus N-Aminoethylpiperazin und Alkoholaminen (vgl. DE-A 29 41 727), Accelerator® 399 (Texaco Chemical Company) und dergleichen eingesetzt werden. Auch anorganische Substanzen wie z. B. Säuren, Basen oder Salze wie Calciumnitrat kommen in Frage.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente A) in Mengen von 0,1 - 4 Gew.-%, vorzugsweise 0,2 - 2,0 Gew.-% zugesetzt sein.

Als Haftvermittler und Hydrophobierungsmittel können u. a. Silane eingesetzt werden. Diese können sowohl mit einem anorganischen Untergrund als auch mit den organischen Polymeren unter Ausbildung von festen Bindungen reagieren. Entsprechende Produkte werden z. B. unter der Bezeichnung Dynasylan® von Evonik Industries AG angeboten.

Die Farbstoffe und Pigmente können sowohl anorganischer als auch organischer Natur sein. Beispielsweise seien genannt Titandioxid, Zinkoxid, Russ, Leitfähigkeitsruss wie z. B. Printex XE 2 der Orion Engineered Carbon. Die organischen Farbstoffe und Pigmente sind so auszuwählen, dass sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen. Als Thixotropier- und Verdickungsmittel können beispielsweise Aerosil® (hochdisperses Siliciumdioxid z. B. die Typen 150, 200, R 202, R 805 der Evonik Industries AG), Bentonit-Typen (z. B. Sylodex® 24 von Grace) sowie Bentone® (NL Chemicals) verwendet werden.

Die Bestandteile A)-D) werden bei Raumtemperatur in geeigneten Aggregaten (z. B. Rührkessel, Statikrührer, Extruder, o. ä.) innig miteinander vermischt.

Die erfindungsgemäße Zusammensetzung kann Verwendung finden zum Beschichten und Verkleben der mannigfaltigsten Werkstoffe, zum Beispiel von Metallen, Leichtmetallen, aber auch nichtmetallischen Werkstoffen wie Keramik, Glas, Leder, Textilien, Gummi, Holz und/oder Kunststoff.

Somit ist ein weiterer Gegenstand der vorliegenden Erfindung die Verwendung der vorab genannten Zusammensetzungen als Beschichtungsmittel, in Dichtstoffanwendungen, in Compositen oder als Klebstoff.

Das Auftragen der erfindungsgemäßen Zusammensetzungen auf die Substrate erfolgt nach den bekannten Verfahren, wie z. B. Streichen, Walzen, Ablegen als Kleberaupe aus geeigneten Aggregaten.

Mit den vorab beschriebenen bevorzugten Aminhärtungsmitteln B) ist es nun prinzipiell möglich, die erfindungsgemäßen Zusammensetzungen enthaltend die Komponenten A), B) und C) bei Raumtemperatur zu härten. Bei diesen relativ niedrigen Temperaturen werden zwar manchmal keine optimalen Eigenschaften des gehärteten Systems erzielt, aber die Anwendung, beispielsweise bei Fußbodenbeschichtungen, lässt eine häufig eine höhere Temperatur nicht zu. Die Härtungstemperatur der erfindungsgemäßen Zusammensetzung liegt im Allgemeinen bei 5 bis 260 °C, vorzugsweise bei 20 bis 200 °C. Die Härtungszeit bei Temperaturen von 20 bis 200 °C liegt im Allgemeinen bei 10 Minuten bis 14 Tagen. Bevorzugt ist eine Aushärtung bei Raumtemperatur, wobei ein Zeitraum von 1 Stunde bis 1 Woche insbesondere bevorzugt ist.

Die erhaltenen Beschichtungen zeichnen sich durch eine ausreichende Wärmeformbeständigkeit aus, die mit den bekannten Modifizierungsmitteln nicht erreicht werden kann. So weisen die Beschichtungen insbesondere eine Wärmeformbeständigkeit nach einem Tag von mehr als 30 °C, sowie nach 7 Tagen von mehr als 40 °C auf. Dabei steigt gleichzeitig die Ausgangs-Viskosität nicht über 5000 mPas hinaus. Als weiterer Vorteil der vorliegenden Erfindung wird das Ausgasen des Modifizierungsmittels verringert, so dass der Umweltschutz-Gesetzgebung dahingehend entsprochen werden kann, ohne Einbußen hinsichtlich der Performance der erhaltenen Beschichtungen hinnehmen zu müssen.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Zur Bestimmung und zum Vergleich der Eigenschaften der Modifizierungsmittel werden Standard-Epoxyformulierungen angefertigt. Dazu mischt man 100 Teile Isophorondiamin (Vestamin® IPD von Evonik Industries AG) als Komponente B) mit 441 Teilen Epikote™ 828 (Bisphenol A Diglicidylether von der Fa. Momentive) als Komponente A) unter Einsatz von 88 Teilen Modifizierungsmittel (Komponente C)). Die Ergebnisse sind in Tabelle 1 dargestellt.

**Tabelle 1**

| **Beispiel** | | **1*) Benzyl alkohol** | **2) 4-Methoxy benzylalkohol** | **3) 4-Isopropyl- benzyl alkohol** | **4) 3- Dimethylamino- benzylalkohol** |
|---|---|---|---|---|---|
| Vestamin® IPD | Gew.-% | 100 | 100 | 100 | 100 |
| Epikote™ 828 | Gew.-% | 441 | 441 | 441 | 441 |
| Modifizierungsmittel | Gew.-% | 88 | 88 | 88 | 88 |
| Siedepunkt Modifizierungsmittel | [°C] | 206 | 258 | 249 | 282 |
| Viskosität | [mPas] | 1100 | 1500 | 1350 | 1960 |

| **Wärmeformbeständigkeit (HDT) DIN EN ISO 75-1 - Härtung: 23°C / 50% LF** | | | | | |
|---|---|---|---|---|---|
| nach 1 Tag | °C | 38 | 36 | 34 | 35 |
| nach 2 Tagen | °C | 48 | 41 | 42 | 43 |
| nach 7 Tagen | °C | 58 | 47 | 48 | 51 |

**Tabelle 1 Fortsetzung**

| **Beispiel** | | **5*) Methoxy propanol** | **6*) Propoxy ethanol** | **7*) Isophoron** | **8*) Benzyltoluol (Marlotherm LH)** |
|---|---|---|---|---|---|
| Vestamin IPD | Gew.-% | 100 | 100 | 100 | 100 |
| Epikote 828 | Gew.-% | 441 | 441 | 441 | 441 |
| Modifizierungsmittel | Gew.-% | 88 | 88 | 88 | 88 |
| Siedepunkt Modifizierungsmittel | [°C] | 119-122 | 150-153 | 215 | 278-282 |
| Viskosität | [mPas] | n.b | n.b | n.b | n.b |

| **Wärmeformbeständigkeit (HDT) DIN EN ISO 75-1 - Härtung: 23°C / 50% LF** | | | | | |
|---|---|---|---|---|---|
| nach 1 Tag | °C | < 20 | < 20 | spröde | spröde |
| nach 2 Tagen | °C | 35 | 30 | spröde | spröde |
| nach 7 Tagen | °C | 50 | 50 | spröde | spröde |

| | | | | | |
|---|---|---|---|---|---|
| *Nicht erfindungsgemäße Vergleichsbeispiele LF: Luftfeuchtigkeit | | | | | |

Aus diesen Daten kann ersehen werden, dass lediglich die erfindungsgemäßen Beispiele vorteilhafte technische Eigenschaften zeigen, insbesondere eine ausreichende Wärmeformbeständigkeit (≥ 30 °C nach einem Tag, sowie ≥ 40 °C nach 7 Tagen), eine Ausgangsviskosität unterhalb von 5000 mPas und einen Siedepunkt oberhalb von 240 °C. Benzylalkohol (Beispiel 1) besitzt einen zu niedrigen Siedepunkt, wohingegen die restlichen Vergleichsbeispiele (Beispiele 5-8) eine unzureichende Wärmeformbeständigkeit zeigen.

## Patentansprüche

1. Verwendung von am aromatischen Ring substituierten Benzylalkoholen, wobei die ringständigen Substituenten ausgewählt sind aus Alkoxy- oder Dialkylaminogruppen oder aus linearen, verzweigten oder cyclischen Alkylgruppen mit mindestens drei C-Atomen, als Modifizierungsmittel für Epoxidharze.

2. Zusammensetzungen enthaltend
A) mindestens ein Epoxid-Gruppen aufweisendes Harz
B) mindestens einen Härter,
C) mindestens ein Modifizierungsmittel in Form eines am aromatischen Ring substituierten Benzylalkohols, wobei die ringständigen Substituenten ausgewählt sind aus Alkoxy- oder Dialkylaminogruppen oder aus linearen, verzweigten oder cyclischen Alkylgruppen mit mindestens drei C-Atomen und
D) optional Hilfs- und Zusatzstoffe.

3. Zusammensetzungen gemäß Anspruch 2, **dadurch gekennzeichnet, dass** als Komponente A) Glycidylether, die sich von mehrwertigen Phenolen ableiten und deren Molmassen, bezogen auf die Anzahl der Epoxygruppen, zwischen 100 und 500 g/mol liegen, eingesetzt werden.

4. Zusammensetzungen gemäß Anspruch 2 oder 3, **dadurch gekennzeichnet, dass** in der Komponente A) Monoepoxide als reaktive Verdünner mit anwesend sind.

5. Zusammensetzungen gemäß einem oder mehreren der Ansprüche 2 bis 4, **dadurch gekennzeichnet, dass** als Komponente B) aliphatische Amine, Oxyalkylenpolyamine, cycloaliphatische Amine, araliphatische Amine, aromatische Amine, Addukthärter, die Umsetzungsprodukte von Epoxidverbindungen mit überschüssigem Amin sind, Polyamidoaminhärter, die durch Kondensation von Mono- und Polycarbonsäuren mit Polyaminen erhalten werden, Mannichbasenhärter, die durch Umsetzung von ein- oder mehrwertigen Phenolen mit Aldehyden und Polyaminen erhalten werden, und/oder Phenalkamine eingesetzt werden.

6. Zusammensetzungen gemäß einem oder mehreren der Ansprüche 2 bis 5, **dadurch gekennzeichnet, dass** in der Komponente C) neben der Hydroxymethylgruppe des Benzylalkohols nur ein weiterer ringständiger Substituent vorliegt.

7. Zusammensetzungen gemäß einem oder mehreren der Ansprüche 2 bis 6, **dadurch gekennzeichnet, dass** als Komponente C) 4-Methoxybenzylalkohol, 3-Dimethylaminobenzylalkohol und 4-Isopropylbenzylalkohol eingesetzt werden.

8. Zusammensetzungen gemäß einem oder mehreren der Ansprüche 2 bis 7, **dadurch gekennzeichnet, dass** die Modifizierungsmittel C) in Mengen von 5 bis 20 Gew.-%, bezogen auf die Summe der Massen der Verbindungen A), B) und C), eingesetzt werden.

9. Verwendung der vorab genannten Zusammensetzungen als Beschichtungsmittel, in Dichtstoffanwendungen, in Compositen oder als Klebstoff.

10. Verwendung gemäß Anspruch 9, **dadurch gekennzeichnet, dass** die Härtungstemperatur bei 5 bis 260 °C liegt.

## Claims

1. Use of benzyl alcohols substituted on the aromatic ring, where the ring substituents are selected from alkoxy or dialkylamino groups or from linear, branched or cyclic alkyl groups having at least three carbon atoms, as modifiers for epoxy resins.

2. Compositions comprising
A) at least one resin having epoxy groups,
B) at least one hardener,
C) at least one modifier in the form of a benzyl alcohol substituted on the aromatic ring, where the ring substituents are selected from alkoxy or dialkylamino groups or from linear, branched or cyclic alkyl groups having at least three carbon atoms and
D) optionally auxiliaries and additional substances.

3. Compositions according to Claim 2, **characterized in that** component A) used comprises glycidyl ethers which derive from polyhydric phenols and which have molar masses, based on the number of the epoxy groups, of from 100 to 500 g/mol.

4. Compositions according to Claim 2 or 3, **characterized in that** monoepoxides are concomitantly present as reactive diluents in component A).

5. Compositions according to one or more of Claims 2 to 4, **characterized in that** component B) used comprises aliphatic amines, oxyalkylenepolyamines, cycloaliphatic amines, araliphatic amines, aromatic amines, adduct hardeners, these being reaction products of epoxy compounds with excess amine, polyamidoamine hardeners obtained via condensation of mono- and polycarboxylic acids with polyamines, Mannich-base hardeners obtained via reaction of mono- or polyhydric phenols with aldehydes and with polyamines, and/or comprise phenalkamines.

6. Compositions according to one or more of Claims 2 to 5, **characterized in that**, in component C), only one other ring substituent is present alongside the hydroxymethyl group of the benzyl alcohol.

7. Compositions according to one or more of Claims 2 to 6, **characterized in that** component C) used comprises 4-methoxybenzyl alcohol, 3-dimethylaminobenzyl alcohol and 4-isopropylbenzyl alcohol.

8. Compositions according to one or more of Claims 2 to 7, **characterized in that** amounts used of the modifiers C) are from 5 to 20% by weight, based on the sum of the masses of the compounds A), B) and C).

9. Use of the abovementioned compositions as coating compositions, in sealant applications, in composites or as adhesive.

10. Use according to Claim 9, **characterized in that** the curing temperature is from 5 to 260°C.

## Revendications

1. Utilisation d'alcools benzyliques substitués sur le cycle aromatique, les substituants sur le cycle étant choisis parmi les groupes alcoxy ou dialkylamino ou parmi les groupes alkyle linéaires, ramifiés ou cycliques contenant au moins trois atomes C, en tant qu'agents de modification pour résines époxydes.

2. Compositions contenant :
A) au moins une résine comprenant des groupes époxyde,
B) au moins un durcisseur,
C) au moins un agent de modification sous la forme d'un alcool benzylique substitué sur le cycle aromatique, les substituants sur le cycle étant choisis parmi les groupes alcoxy ou dialkylamino ou parmi les groupes alkyle linéaires, ramifiés ou cycliques contenant au moins trois atomes C, et
D) éventuellement des adjuvants et additifs.

3. Compositions selon la revendication 2, **caractérisées en ce que** des éthers glycidyliques qui dérivent de phénols polyvalents et dont les masses molaires, par rapport au nombre de groupes époxy, sont comprises entre 100 et 500 g/mol, sont utilisés en tant que composant A).

4. Compositions selon la revendication 2 ou 3, **caractérisées en ce que** des monoépoxydes sont présents en tant que diluants réactifs dans le composant A).

5. Compositions selon une ou plusieurs des revendications 2 à 4, **caractérisées en ce que** des amines aliphatiques, des oxyalkylène-polyamines, des amines cycloaliphatiques, des amines araliphatiques, des amines aromatiques, des durcisseurs adduits, qui sont des produits de réaction de composés époxyde avec une amine en excès, des durcisseurs polyamidoamines, qui sont obtenus par condensation d'acides mono- et polycarboxyliques avec des polyamines, des durcisseurs bases de Mannich, qui sont obtenus par réaction de phénols mono- ou polyvalents avec des aldéhydes et des polyamines, et/ou des phénalkamines sont utilisés en tant que composant B).

6. Compositions selon une ou plusieurs des revendications 2 à 5, **caractérisées en ce que** seul un autre substituant sur le cycle est présent dans le composant C) en plus du groupe hydroxyméthyle de l'alcool benzylique.

7. Compositions selon une ou plusieurs des revendications 2 à 6, **caractérisées en ce que** de l'alcool 4-méthoxybenzylique, de l'alcool 3-diméthylaminobenzylique et de l'alcool 4-isopropylbenzylique sont utilisés en tant que composant C) .

8. Compositions selon une ou plusieurs des revendications 2 à 7, **caractérisées en ce que** les agents de modification C) sont utilisés en quantités de 5 à 20 % en poids, par rapport à la somme des masses des composés A), B) et C) .

9. Utilisation des compositions mentionnées précédemment en tant qu'agents de revêtement, dans des applications d'agents d'étanchéité, dans des composites ou en tant qu'adhésif.

10. Utilisation selon la revendication 9, **caractérisée en ce que** la température de durcissement est de 5 à 260 °C.
